# EUROPÄISCHE PATENTSCHRIFT

(11) **EP 1 120 531 B1**
(45) Veröffentlichungstag und Bekanntmachung des Hinweises auf die Patenterteilung: **09.03.2005**
(21) Anmeldenummer: 01100624.4
(22) Anmeldetag: 11.01.2001
(51) Int. Cl.: E06B 3/984, F16B 25/00, E06B 3/96, F16B 12/14

(54) **Verbindung von aneinander anliegenden oder aneinander anstossenden Holzprofilen**
Assembly of abutting wooden frame members
Assemblage de profilés en bois jointifs

(30) Priorität: 25.01.2000 DE 20001250 U
(43) Veröffentlichungstag der Anmeldung: 01.08.2001
(73) Patentinhaber: SFS intec Holding AG, 9435 Heerbrugg (CH)
(72) Erfinder: Steffen, Markus, 9472 Grabs (CH); Sieber, Alex, 9434 Au (CH)
(74) Vertreter: Ludescher, Hans

(56) Entgegenhaltungen:
- EP-A- 1 002 926
- AT-B- 391 168
- DE-U- 1 907 573

## Beschreibung

Die Erfindung betrifft eine Verbindung von aneinander anliegenden oder aneinander anstoßenden Holzprofiler mittels eines, aus einem Hülsenteil und einer mit einem Kopf versehenen Schraube bestehenden Befestigungselementes.

In vielen Ausführungsvarianten wurde schon versucht, mechanisch wirkende Holzverbindungen herzustellen, welche insbesondere bei Fenstern oder Fensterrahmen zu verschiedenen Lösungen führten. Bei der Verbindung von Holzprofilen ergeben sich vielfach Probleme, weil der natürliche Werkstoff Holz quer zur Faserrichtung relativ starken Dimensionsänderungen unterworfen ist. Zudem ist eine optimale Befestigung in Holz parallel zur Faserrichtung nach wie vor problematisch. Mit den bisherigen Methoden zur Verbindung von Holzprofilen ergeben sich fast immer schwundbedingte Spaltbildungen, was nicht nur zu ästhetischen Problemen, sondern auch zu Einbußen bei der Festigkeit einer solchen Verbindung führt. Eine Spaltwirkung führt insbesondere bei bewitterten Holzteilen zu einer Kapillarfuge, über die Wasser eindringen kann. Dadurch findet eine Anfeuchtung des Holzes statt. Selbst wenn eine Verschraubung unter Aufbringung eines großen Anzugsmomentes angewendet wird, kann eine schwundbedingte Spaltbildung nicht verhindert werden. Außerdem darf gerade bei Schrauben für den Holzbereich, insbesondere bei Einsatz parallel zur Faserrichtung, kein allzu großes Drehmoment aufgebracht werden, ansonsten die Schraube überdreht.

Bei einer bekannten Ausführung (AT-B- 391 168) ist als Befestigungselement ein Hülsenteil und eine mit einem Kopf versehene Schraube vorgesehen. Der Hülsenteil ist über die gesamte Dicke des entsprechenden Holzprofiles geführt und überragt sogar noch mit vorstehenden Spitzen dieses erste Holzprofil entsprechend. Dieser Hülsenteil ist ausschliesslich mit seinem gegenüber liegenden freien Ende an der Oberfläche des ersten Holzprofiles abgestützt.

Bei einer weiteren bekannten Ausgestaltung (DE-U- 1907 573) ist eine Ausführungsvariante mit einem kurzen Hülsenteil vorgesehen, wobei dieser Hülsenteil ausschliesslich in dem einen Profil angeordnet ist. Zum Verspannen wird hier eine Stange eingesetzt, welche am anderen Ende ein Maschinengewinde aufweist, welches in einen mit einer Gewindebohrung versehenen Querbolzen eingedreht wird. Hier kommt es nicht darauf an, ob nun diese Stange kürzer oder länger ausgebildet ist oder eine entsprechende Längenabmessung in Bezug auf den Hülsenteil aufweist. Hier ist also keine Verbindung von aneinander anliegenden oder aneinander anstossenden Holzprofilen mittels eines Befestigungselementes gegeben, welches über einen Gewindeeingriff in die Wandung einer Bohrung eingreift.

Die vorliegende Erfindung hat sich daher zur Aufgabe gestellt, eine Verbindung der eingangs genannten Art zu schaffen, mit welcher in konstruktiv einfacher Art und Weise sowohl Querkräfte als auch in Längsrichtung des Befestigungselementes wirkende Kräfte optimal übertragen werden können.

Erfingdungsgemäß gelingt dies dadurch, dass der Hülsenteil in das eine Holzprofil quer zur Faserrichtung verlaufend nahe dem Übergangsbereich zwischen den beiden Holzprofilen eingesetzt ist und sich über einen Teil der Dicke des Holzprofils erstreckt und an seinem Außenumfang mit einem Gewinde oder mit Rippen, Rillen, einer Rändelung oder Aufrauhung versehen ist und an dem dem Übergangsbereich zwischen den beiden Holzprofilen abgewandten Bereich einen Anschlag für einen Kopf, einen konisch erweiterten Schaftabschnitt oder dergleichen für die durch den Hülsenteil eingesetzte Schraube bildet, und wobei die Länge des mit einem Gewinde versehenen Schaftes der Schraube, welcher im Wesentlichen achsparallel zu den Fasern des anderen Holzprofils eindrehbar ist, ein Mehrfaches der axialen Länge des Hülsenteiles aufweist.

Ein derartiges Befestigungselement kann bei allen möglichen Holzkonstruktionen, wie Wänden oder Decken, Fenstern oder Türen, Klappläden, Fenster- oder Türrahmen, Möbeln, Regalen oder dergleichen eingesetzt werden. Selbst bei starken Belastungen auf die miteinander zu verbindenden Holzprofile, bei welchsen es sich auch um Bretter handeln kann, können die erforderlichen Querkräfte problemlos aufgenommen werden. Außerdem ist eine gegenseitige feste Verbindung der Holzprofile gewährleistet.

Gerade in Hinblick auf das Problem, daß der natürliche Werkstoff Holz quer zur Faserrichtung relativ starken Dimensionsänderungen unterworfen ist, kann durch die erfindungsgemäßen Maßnahmen optimal begegnet werden. Gerade in dem Holzprofil, wo das Befestigungselement quer zur Faserrichtung eingesetzt ist, liegt der Hülsenteil unmittelbar an dem Abschnitt, der an dem nächsten Holzprofil anliegt. In jenem Holzprofil hingegen, in welchem die Schraube im Wesentlichen parallel zur Faserrichtung einzusetzen ist, ergibt sich ebenfalls eine optimale Halterung, weil der Eingriff auf eine entsprechend große Länge erfolgt.

Eine zusätzliche optimale Möglichkeit ergibt sich bei Ausbildung eines konisch sich erweiternden Schaftabschnittes an der Schraube oder eines entsprechenden konisch sich erweiternden Überganges unterhalb des Kopfes der Schraube. Auf diese Weise kann eine drehmomentabhängige Abschaltung eines Eindrehwerkzeuges bewirkt werden. Beim Eindringen des konisch sich erweiternden Schaftabschnittes in die Bohrung der Hülse wird zuerst einmal ein Zusammenziehen der beiden Holzprofile bewirkt. Sobald dann durch den stärkeren Eingriff des konischen Schaftabschnittes das Drehmoment plötzlich erhöht wird, erfolgt ein Abschalten des Eindrehwerkzeuges, so daß damit auch die Gefahr des Überdrehens des Gewindes in dem im Wesentlichen achsparallel zu den Fasern verlaufenden Holzprofil verhindert wird.

Um den Hülsenteil in einfacher Weise in eine vorbereitete Bohrung an dem entsprechenden Holzprofil eindrehen zu können, wird vorgeschlagen, daß an einem Ende oder an beiden Enden des Hülsenteiles ein Angriff für ein Werkzeug ausgebildet ist.

Damit der Hülsenteil trotz des Einsatzes nur auf einem Teilbereich der Dicke eines Holzprofiles fest verankert werden kann, ist vorgesehen, daß am Außenumfang des Hülsenteiles über dessen ganze Länge ein Gewinde, Rippen, Rillen, eine Rändelung oder Aufrauhung ausgebildet ist. Es trägt daher die ganze Länge des Hülsenteiles zu einer entsprechenden Verankerung in der quer zu der Faserrichtung verlaufenden Bohrung bei.

Dabei kann noch insofern eine Verbesserung erzielt werden, wenn am Außenumfang des Hülsenteiles über dessen ganze Länge sägezahnförmige Rippen ausgebildet sind.

Weiter wird vorgeschlagen, daß das Gewinde auf dem Schaft der Schraube und gegebenenfalls bei Anordnung eines Gewindes auf dem Hülsenteil auch dieses schmal und schneidenartig ausgeführt ist. Es ist daher eine Art Passung bezüglich des Kerndurchmessers der Schraube in dem Bohrloch oder auch bei Eindrehen ohne Vorbohren gewährleistet. Auch bei dem Hülsenteil ist auf diese Weise ein passendes Einsetzen möglich, wobei lediglich die schneidenartig ausgebildeten Gewindegänge in die Bohrungsbegrenzung eingreifen, so daß dadurch auch eine Spaltgefahr ausgeschlossen ist.

Gerade beim Einsatz einer Schraube für den erfindungsgemäßen Zweck, also zum Eindrehen parallel zur Faserrichtung, wird vorteilhafterweise vorgeschlagen, daß die Steigung des Gewindes der Schraube annähernd dem Kerndurchmesser des Schaftes im Gewindebereich entspricht. Es ergibt sich dadurch eine relativ große Gewindesteigung, wobei trotzdem eine gute Halterung der Schraube parallel zur Faserrichtung erzielt wird. Außerdem ist dadurch noch die Spaltgefahr des Holzprofiles stark herabgesetzt, wenn nicht gänzlich unterbunden.

Damit eine gegebenenfalls schwundbedingte Spaltbildung von vorneherein ausgeschaltet werden kann, wird vorgesehen, daß zwischen dem Kopf der Schraube und dem als Anschlag wirkenden einen Ende des Hülsenteils ein oder mehr als ein Federelement eingesetzt ist. Es ist dadurch stets gewährleistet, daß die aneinander anliegenden oder aneinander anstoßenden Holzprofile stets ohne einen Spalt aneinander abgestützt sind.

Eine optimale Montage des Befestigungselementes praktisch unter Ausschaltung einer Spaltwirkung ist dann gegeben, wenn der Hülsenteil und die Schraube in vorgebohrte Löcher in den Holzprofilen einsetzbar sind. Es dringt dann lediglich das Gewinde oder irgendwelche Oberflächengestaltung des Hülsenteiles in die Bohrungswandung ein, so daß ein optimaler Sitz und auch eine entsprechende Abstützung gewährleistet sind.

Im Rahmen der Erfindung ist es aber auch denkbar, daß die Schraube mit einer selbsteindringenden oder mit einer selbstbohrenden Spitze versehen ist. Bei einer solchen Ausgestaltung wird als sinnvolle Ergänzung eine Konstruktion vorgesehen, damit ausreichend Platz zur Aufnahme der Bohrspäne vorhanden ist. Vom Zeitaufwand für die Befestigung von Holzprofilen her gesehen ist eine solche Lösung mit einer selbstbohrenden Spitze zu bevorzugen.

Weitere erfindungsgemäße Merkmale und besondere Vorteile werden in der nachstehenden Beschreibung anhand der Zeichnung noch näher erläutert. Es zeigen:
- Fig. 1: ein erfindungsgemäßes, aus Hülsenteil und Schraube bestehendes Befestigungselement;
- Fig. 2: einen Schnitt durch die Verbindung zwischen zwei Holzprofilen, wobei ein erfindungsgemäßes Befestigungselement eingesetzt ist;
- Fig. 3: eine Ansicht des Verbindungsbereiches zwischen zwei Holzprofilen in Pfeilrichtung III in Fig 2;
- Fig. 4: eine andere Ausführungsvariante des Befestigungselementes.

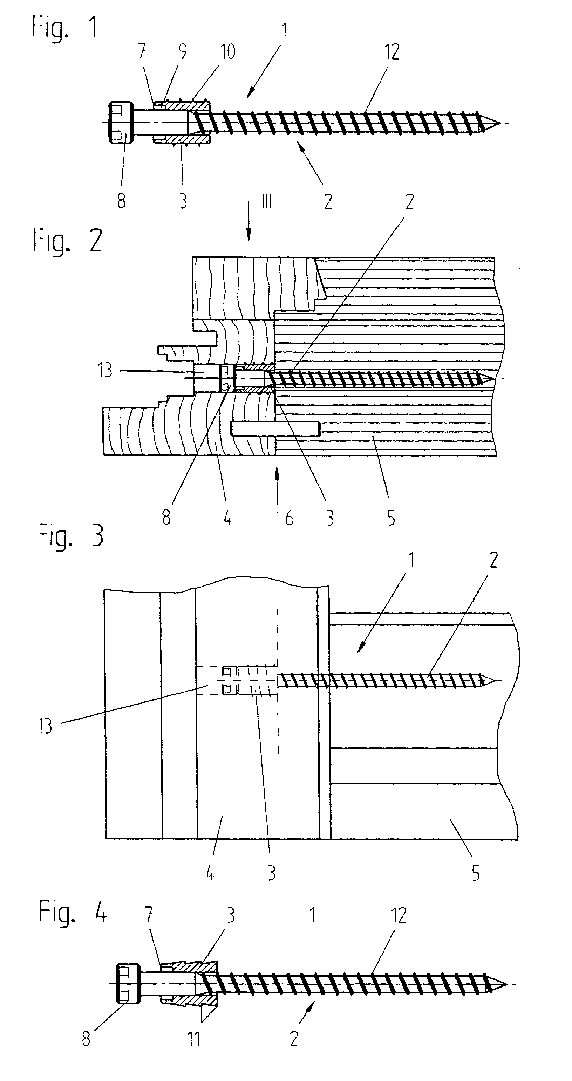

Das in Fig. 1 dargestellte Befestigungselement 1 besteht aus einer Schraube 2 und einem Hülsenteil 3 und dient zur gegenseitigen Verbindung von stumpf oder in einem Gehrungsschnitt aneinander anliegenden oder aneinander anstoßenden Holzprofilen 4 und 5. In der Regel handelt es sich dabei um aus Holzprofilen gebildete Holzkonstruktionen, wie Wände oder Decken, Fenster oder Türen, Klappläden, Fenster- oder Türrahmen, Möbel, Regale usw. Durch die beschriebene Eck- oder Kämpferverbindung wird mittels des aus Schraube 2 und Hülsenteil 3 gebildeten Befestigungselementes 1 eine Befestigungsmöglichkeit geschaffen, welche praktisch überall dort optimal eingesetzt werden kann, wo zumindest teilweise aus Holz bestehende Profile zusammengefügt werden sollen. Ob es sich dabei schlußendlich um Holzprofile, Holzplatten, Holzbalken oder Holzbretter handelt, ist nicht von Bedeutung. Natürlich wird eine solche Befestigungsmöglichkeit je nach Anwendungsbereich dimensionsmäßig angepaßt.

Wie insbesondere den Fig. 2 und 3 zu entnehmen ist, wird der Hülsenteil 3 nahe dem Übergangsbereich 6 zwischen den beiden Holzprofilen 4 und 5 eingesetzt. Der eine Endbereich des Hülsenteiles 3 bildet einen Anschlag 7 für den Kopf 8 der Schraube 2. Der Hülsenteil 3 ist also in dem einen Holzprofil 4 quer zur Faserrichtung verlaufend eingesetzt, wogegen die Schraube 2 in das andere Holzprofil 5 im Wesentlichen parallel zur Faserrichtung eingedreht wird. Der Hülsenteil 3 ist relativ kurz ausgeführt, erstreckt sich also nicht über die ganze Dicke des Holzprofils 4. Die Länge des mit einem Gewinde versehenen Schaftes der Schraube 2 ist hingegen relativ lang ausgebildet und greift parallel zur Faserrichtung in das Holzprofil 5 ein. Die Länge des mit einem Gewinde versehenen Schaftes der Schraube beträgt ein Mehrfaches der axialen Länge des Hülsenteiles 3.

Gerade in diesem Zusammenhang kann die besondere Ausbildung der Schraube besondere Vorteile mit sich bringen. So wäre es denkbar, an dem einen Ende der Schraube einen konisch sich erweiternden Schaftabschnitt vorzusehen oder aber einen konisch sich erweiternden Übergang vom eigentlichen Schaft zum Kopf der Schraube oder einem entsprechenden Bund der Schraube. Dadurch dringt ein konisch sich erweiternder Schaftabschnitt oder ein entsprechender Übergang beim Eindrehen der Schraube in den Anfangsbereich der Bohrung des Hülsenteiles 3 ein, wobei vorerst dafür gesorgt wird, daß durch die entstehende Axialkraft die beiden Holzprofile 4, 5 zusammengezogen werden. Anschlielßend ergibt sich dann ein plötzlich sich erhöhendes Drehmoment, worauf das Eindrehwerkzeug abgeschaltet wird. Es muß also nicht mit Tiefenanschlag gearbeitet werden.

Es muß also nicht mehr auf einen Tiefenanschlag gearbeitet werden. Bei einem Tiefenanschlag kann nämlich ein Zusammenziehen der beiden Holzprofile praktisch nicht erfolgen, und außerdem kann unter Umständen ein Überdrehen der Schraube in dem Bereich parallel zur Faserrichtung eines Holzprofiles erfolgen.

An dem einen Ende des Hülsenteiles 3 ist ein Angriff 9 für ein Werkzeug ausgebildet. Ein solcher Angriff 9 kann auch an dem anderen Ende des Hülsenteiles 3 ausgeführt werden oder aber an beiden Enden. Je nach Art des Einbringens des Hülsenteiles 3 ist die eine oder andere Konstruktion sinnvoll. Dies hängt also auch davon ab, ob dieser Hülsenteil 3 von der Rückseite des Holzprofiles 4 eingebracht wird oder von der Vorderseite desselben.

Der Hülsenteil 3 kann an seinem Außenumfang vorteilhaft über dessen ganze Länge mit einem Gewinde 10 versehen sein. Anstelle eines Gewindes 10 wäre es auch denkbar, entsprechende Rippen, Rillen, eine Rändelung oder eine Aufrauhung vorzusehen, da auf jeden Fall gewährleistet werden muß, daß der Hülsenteil 3 in axialer Richtung gesichert in dem Holzprofil 4 gehalten wird. Wie insbesondere bei der Ausführung nach Fig. 4 ersichtlich ist, wäre es auch möglich, am Außenumfang des Hülsenteiles 3 sägezahnförmige Rippen 11 vorzusehen, wobei bei einer solchen Konstruktion der Hülsenteil 3 von der Rückseite des Holzprofils 4 eingeschlagen wird. Wenn dann die Schraube 2 angezogen wird, greifen die Rippen 11 nach Art von Widerhaken in die Bohrungswandung ein.

Das Gewinde 12 auf dem Schaft der Schraube 2 ist relativ schmal und schneidenartig ausgeführt, um dadurch beim Eindrehen parallel zur Faserrichtung des Holzprofils 5 eine Spaltwirkung zu verhindern. Auch bei Anordnung eines Gewindes 10 auf dem Hülsenteil 3 ist es zweckmäßig, dieses Gewinde 10 schmal und schneidenartig auszuführen. Es ist hier von besonderem Vorteil, daß eine Schraube mit relativ großer Gewindesteigung eingesetzt wird, um dadurch ein rasches Eindrehen zu ermöglichen und auch die Spaltgefahr herabzusetzen. Vorteilhaft ist dabei die Steigung des Gewindes 12 der Schraube 2 annähernd dem Kerndurchmesser des Schaftes im Gewindebereich entsprechend ausgestaltet.

Aus F g. 2 und 3 ist ersichtlich, daß der Hülsenteil 3 in ein vorgebohrtes Loch 13 eingesetzt wird. Dies ist infolge des relativ großen Durchmessers dieses Hülsenteiles 3 von Vorteil. Es ist möglich, auch für den Einsatz der Schraube 2 in dem Holzprofil 5 ein vorgebohrtes Loch vorzusehen. Wenn die Schraube mit einer selbsteindringenden oder mit einer selbstbohrenden Spitze versehen ist, kann auch auf ein Vorbohren in dem Holzprofil 5, also parallel zur Faserrichtung, verzichtet werden.

Im Rahmen der Erfindung ist insofern noch als Ergänzung möglich, zwischen dem Kopf 8 der Schraube 2 und dem als Anschlag 7 wirkenden einen Ende des Hülsenteiles 3 ein Federelement oder auch mehr als ein Federelement einzusetzen. Es ist dadurch stets eine federnde Belastung der aneinander anliegenden Bereiche der Holzprofile gegeben, so daß auch bei einem eventuellen Schwinden des Holzprofils 4 kein Spalt zwischen den Holzprofilen 4 und 5 entstehen kann.

Im Rahmen der Erfindung ist es auch möglich, in den frei bleibenden Abschnitt des vorgebohrten Loches 13 einen Pfropfen zum Verschließen dieses Loches einzusetzen.

Durch die vorliegende Erfindung wird eine Befestigungsmöglichkeit geschaffen, mit welcher bei der Verbindung von Holzprofilen in optimaler Weise eine mechanische Befestigung in Form von Schrauben und Hülsenteilen eingesetzt werden kann. Außerdem ist die Gewähr gegeben, daß die damit verbundenen Holzprofile später zu Recyclingzwecken problemlos wieder demontiert werden können. Zudem ist ein Nachziehen bei einem eventuellen Schwundverhalten der Holzprofile 4 grundsätzlich möglich.

## Patentansprüche

1. Verbindung von aneinander anliegenden oder aneinander anstoßenden Holzprofilenmittels eines, aus einem Hülsenteil (3) und einer mit einem Kopf (8) versehenen Schraube (2) bestehenden Befestigungselementes, **dadurch gekennzeichnet, dass** der Hülsenteil (3) in das eine Holzprofil (4) quer zur Faserrichtung verlaufend nahe dem Übergangsbereich zwischen den beiden Holzprofilen (4, 5) eingesetzt ist und sich über einen Teil der Dicke des Holzprofils (4) erstreckt und an seinem Außenumfang mit einem Gewinde (10) oder mit Rippen (11), Rillen, einer Rändelung oder Aufrauhung versehen ist und an dem dem Übergangsbereich (6) zwischen den beiden Holzprofiler (4, 5) abgewandten Bereich einen Anschlag (7) für einen Kopf (8), einen konisch erweiterten Schaftabschnitt oder dergleichen für die durch den Hülsenteil (3) eingesetzte Schraube (2) bildet, und wobei die Länge des mit einem Gewinde (12) versehenen Schaftes der Schraube (2), welcher im Wesentlichen achsparallel zu den Fasern des anderen Holzprofils (5) eindrehbar ist, ein Mehrfaches der axialen Länge des Hülsenteiles (3) aufweist.

2. Verbindung nach Anspruch 1, **dadurch gekennzeichnet, daß** an einem Ende oder an beiden Enden des Hülsenteiles (3) ein Angriff (9) für ein Werkzeug ausgebildet ist.

3. Verbindung nach den Ansprüchen 1 und 2, **dadurch gekennzeichnet, daß** am Außenumfang des Hülsenteiles (3) über dessen ganze Länge ein Gewinde (10), Rippen (11), Rillen, eine Rändelung oder Aufrauhung ausgebildet ist.

4. Verbindung nach Anspruch 3, **dadurch gekennzeichnet, daß** am Außenumfang des Hülsenteiles (3) über dessen ganze Länge sägezahnförmige Rippen (11) ausgebildet sind.

5. Verbindung nach einem der Ansprüche 1 bis 3, **dadurch gekennzeichnet, daß** das Gewinde (12) auf dem Schaft der Schraube (2) und gegebenenfalls bei Anordnung eines Gewindes (10) auf dem Hülsenteil (3) auch dieses schmal und schneidenartig ausgeführt ist.

6. Verbindung nach einem der Ansprüche 1 bis 5, **dadurch gekennzeichnet, daß** die Steigung des Gewindes (12) der Schraube (2) annähernd dem Kemdurchmesser des Schaftes im Gewindebereich entspricht.

7. Verbindung nach einem der Ansprüche 1 bis 6, **dadurch gekennzeichnet, daß** zwischen dem Kopf (8) der Schraube (2) und dem als Anschlag (7) wirkenden einen Ende des Hülsenteils (3) ein oder mehr als ein Federelement eingesetzt ist.

8. Verbindung nach einem der Ansprüche 1 bis 7, **dadurch gekennzeichnet, daß** der Hülsenteil (3) und die Schraube (2) in vorgebohrte Löcher (13) in den Holzprofilen (4, 5) einsetzbar sind.

9. Verbindung nach einem der Ansprüche 1 bis 7, **dadurch gekennzeichnet, daß** die Schraube (2) mit einer selbsteindringenden oder mit einer selbstbohrenden Spitze versehen ist.

## Claims

1. Connection of timber sections, which adjoin or abut one another, by means of a fastening element comprising a sleeve part (3) and a screw (2) provided with a head (8), **characterised in that** the sleeve part (3) is inserted into one timber section (4) extending across the grain close to the transitional zone between the two timber sections (4,5) and extends over part of the thickness of the timber section (4) and on its outer periphery is provided with a screw-thread (10) or with ribs (11), grooves, a knurling or a roughened portion, and at the zone remote from the transitional zone (6) between the two timber sections (4,5) forms an abutment (7) for a head (8), a conically widened shank portion or the like for the screw (2) inserted through the sleeve part (3), and wherein the length of the shank of the screw (2) provided with a screw-thread (12), which can be screwed in substantially axially parallel to the grain of the other timber section (5), is a multiple of the axial length of the sleeve part (3).

2. Connection according to Claim 1, **characterised in that** an engagement portion (9) for a tool is formed at one end or at both ends of the sleeve part (3).

3. Connection according to Claims 1 and 2, **characterised in that** a screw-thread (10), ribs (11), grooves, a knurling or a roughened portion is formed on the outer periphery of the sleeve part (3) over its entire length.

4. Connection according to Claim 3, **characterised in that** sawtooth-like ribs (11) are formed on the outer periphery of the sleeve part (3) over its entire length.

5. Connection according to any one of Claims 1 to 3, **characterised in that** the screw-thread (12) on the shank of the screw (2), and optionally if a screw-thread (10) is provided on the sleeve part (3), is also formed narrow and in the manner of a cutting edge.

6. Connection according to any one of Claims 1 to 5, **characterised in that** the pitch of the screw-thread (12) of the screw (2) corresponds approximately to the core diameter of the shank in the threaded portion.

7. Connection according to any one of Claims 1 to 6, **characterised in that** a spring element or more than one spring elements is/are inserted between the head (8) of the screw (2) and the end of the sleeve part (3) acting as an abutment (7).

8. Connection according to any one of Claims 1 to 7, **characterised in that** the sleeve part (3) and the screw (2) can be inserted into predrilled holes (13) in the timber sections (4, 5) .

9. Connection according to any one of Claims 1 to 7, **characterised in that** the screw (7) is provided with a self-penetrating tip or with a self-drilling tip.

## Revendications

1. Assemblage de profilés en bois disposés l'un à côté de l'autre ou l'un en butée contre l'autre, au moyen d'un élément de fixation composé d'une partie formant douille (3) et d'une vis (2) munie d'une tête (8),
**caractérisé en ce que**
la partie formant douille (3) est insérée dans l'un des profilés en bois (4), en s'étendant transversalement à la direction des fibres, à proximité de la région de jonction entre les deux profilés en bois (4, 5), elle s'étend sur une partie de l'épaisseur du profilé en bois (4), et est munie sur sa périphérie extérieure d'un filetage (10) ou de nervures (11), de gorges, d'un moletage ou d'une surface rendue rugueuse, tandis que, dans la région éloignée de la région de jonction (6) entre les deux profilés en bois (4, 5), elle forme une butée (7) pour une tête (8), un segment de tige élargi en cône, ou analogue, de la vis (2) enfilée dans la partie formant douille (3), et tandis que la longueur de la tige de la vis (2) munie d'un filetage (12), qui peut être vissée sensiblement parallèlement à l'axe des fibres de l'autre profilé (5), est un multiple de la longueur axiale de la partie formant douille (3).

2. Assemblage selon la revendication 1,
**caractérisé en ce qu'**
à une extrémité ou aux deux extrémités de la partie formant douille (3), est formée une prise (9) pour un outil.

3. Assemblage selon les revendications 1 et 2,
**caractérisé en ce que**
sur la périphérie extérieure de la partie formant douille (3) est ou sont prévus, sur toute sa longueur, un filetage (10), des nervures (11), des gorges, un moletage ou une surface rendue rugueuse.

4. Assemblage selon la revendication 3,
**caractérisé en ce que**
des nervures (11) en dents de scie sont formées sur la périphérie extérieure de la partie formant douille (3), sur toute la longueur de cette dernière.

5. Assemblage selon une des revendications 1 à 3,
**caractérisé en ce que**
le filetage (12) prévu sur la tige de la vis (2) et éventuellement le filetage (10) prévu sur la partie formant douille (3) est ou sont étroits et en forme d'arête tranchante.

6. Assemblage selon une des revendications 1 à 5,
**caractérisé en ce que**
le pas du filetage (12) de la vis (2) correspond environ au diamètre de noyau de la tige dans la région du filetage.

7. Assemblage selon une des revendications 1 à 6,
**caractérisé en ce qu'**
un ou plusieurs éléments élastiques est ou sont intercalés entre la tête (8) de la vis (2) et celle des extrémités de la partie formant douille (3) qui forme une butée (7).

8. Assemblage selon une des revendications 1 à 7,
**caractérisé en ce que**
la partie formant douille (3) et la vis (2) peuvent être insérées dans des trous (13) préalablement percés dans les profilés en bois (4, 5).

9. Assemblage selon une des revendications 1 à 7,
**caractérisé en ce que**
la vis (2) est munie d'une pointe autopénétrante ou autoforeuse.
